# FASCICULE DE BREVET EUROPEEN

(11) **EP 1 367 471 B1**
(45) Date de publication et mention de la délivrance du brevet: **07.05.2008**
(21) Numéro de dépôt: 03009726.5
(22) Date de dépôt: 02.05.2003
(51) Int. Cl.: G05B 19/42

(54) **Procédé d'apprentissage des fins de course d'un actionneur de volet roulant**
Verfahren um einen Rolladenaktuator Limitänderungen zu lehren
Method of teaching limit switches for an roller blind actuator

(30) Priorité: 13.05.2002 FR 0205860
(43) Date de publication de la demande: 03.12.2003
(73) Titulaire: Somfy SAS, 74300 Cluses (FR)
(72) Inventeur: Maistre, Valérie, 74300 Thyez (FR); Cathala, Jean-Pierre, 74420 Burdignin (FR)
(74) Mandataire: Bugnion Genève

(56) Documents cités:
- EP-A- 0 426 577
- EP-A- 0 671 676
- EP-A- 0 967 360
- FR-A- 2 737 318
- FR-A- 2 808 835
- US-A- 5 270 629

## Description

L'invention se rapporte à un procédé d'apprentissage des fins de course d'un actionneur électrique destiné à la manoeuvre de produits mobiles de protection solaire, d'occultation ou de fermeture. L'invention concerne également un dispositif permettant la mise en oeuvre du procédé d'apprentissage.

Il existe dans l'état de la technique des brevets relatifs à des dispositifs ou des procédés d'apprentissage des fins de course.

Le brevet français FR 2 743 602 concerne une installation de fermeture ou de protection solaire motorisée. Dans ce brevet, on suppose l'existence de deux butées franches haute et basse. Le but est de distinguer ces butées d'un obstacle ou encore d'un défaut tel qu'un point dur dans une coulisse. L'usage d'un compteur bidirectionnel (incrémentation décrémentation) est proposé en association avec un moyen de mesure de variations de vitesse ou de couple. Le procédé d'apprentissage décrit met à profit l'existence de butées franches mais il n'y a pas d'indication spécifique de la position basse par l'installateur.

Dans le brevet français FR 2 754 117 portant sur un dispositif de commande de store ou volet roulant, on suppose également l'existence de deux butées franches.

La procédure décrite est celle d'une séquence automatique visant à l'affectation du bon sens de rotation moteur en réponse à un ordre donné depuis le point de commande. Au cours de cette procédure, le produit part automatiquement à la rencontre de la première puis de la deuxième butée. Une comparaison des temps de parcours est effectuée, et la position des butées est éventuellement enregistrée de manière automatique. Le procédé d'apprentissage utilisé met donc à profit l'existence de butées franches. Il n'y a pas d'indication spécifique de la position basse par l'installateur.

Le brevet français FR 2 780 089 décrit un dispositif de commande d'un moteur d'entraînement d'un volet roulant. Ce brevet répond au souci de réaliser un dispositif de réglage automatique permettant d'identifier la position basse, et la nature de la liaison entre l'actionneur (ou le tube d'enroulement) et le volet. A cet effet, le dispositif comprend au moins des moyens d'analyse fine de variations du couple moteur. Ces moyens comprennent au moins un capteur par exemple un capteur de « micro-déplacements » et un convertisseur analogique-numérique. La Figure 2 de ce brevet montre clairement le type d'analyse de variations de couple nécessaire, et donc la précision du dispositif de mesure. L'application des algorithmes présentés dans ce brevet est donc nécessairement coûteuse. Il n'y a pas d'indication spécifique de la position basse du volet roulant par l'installateur.

Le brevet français FR 2 790 787 porte sur un dispositif de détection de la fin d'empilement des lames d'un volet roulant. Ce brevet décrit plus particulièrement les difficultés de détection de fin d'empilement des lames d'un volet roulant, lorsqu'il s'agit de lames enroulables. Comme précédemment, la détection de couple est réalisée au moyen d'un capteur sensible de « micro-déplacements ». La fin d'empilement est détectée par le rattrapage d'un jeu angulaire. Malgré ses avantages, cette invention nécessite donc à la fois le capteur précédent et son électronique de traitement, mais aussi un montage mécanique spécifique de création du jeu angulaire. Il n'y a pas d'indication spécifique de la position basse du volet par l'installateur.

La demande de brevet d'invention FR 2 808 835 présente la particularité de proposer un procédé de réglage dans lequel une deuxième fin de course est mémorisée de manière implicite après qu'a été enregistrée, soit automatiquement (dans le cas d'une butée franche), soit par procédure manuelle, la première fin de course. Ainsi donc, dans le cas (cf. page 9 ligne 27) d'un produit présentant une seule butée franche permettant le réglage automatique (par exemple butée haute), le procédé selon cette demande nécessiterait que l'installateur :
- active le mode de réglage automatique et envoie le produit vers sa butée franche en appuyant sur la touche montée, jusqu'à provoquer l'enregistrement automatique de la position de fin de course haute.
- reprenne la main en commandant le produit jusqu'à l'amener dans la position basse désirée,
- renvoie le produit vers la butée haute, cette manoeuvre ayant pour but d'enregistrer la position basse.

Il apparaît que cette façon de faire l'enregistrement de la position "non automatique" est surprenante et suffisamment contraire à l'intuition pour engendrer l'incompréhension des installateurs et une perte de temps sur les chantiers. De plus, ce procédé empêche une procédure rapide d'installation puisqu'elle oblige l'installateur à provoquer l'enregistrement automatique de la butée avant de repositionner le produit sur la position sans butée.

Lorsqu'on installe un actionneur entraînant un produit de protection solaire, d'occultation ou de fermeture, on rencontre trois types de configurations :
- le produit présente deux butées franches,
- le produit présente une butée franche,
- le produit ne présente pas de butée franche.

Les procédés d'apprentissage des fins de course décrits précédemment ne sont pas adaptés à l'ensemble de ces types de configurations. Par conséquent, il faut programmer le procédé d'apprentissage de l'actionneur en fonction du nombre de butées franches que possède le produit ou utiliser pour tous les produits un même procédé d'apprentissage non automatique où l'installateur indique les positions de fins de course, et ce, même si le produit présente des butées franches.

Le document EP 0 671 676 se rapporte à un procédé d'apprentissage des fins de course d'un dispositif de volet roulant dans lequel on entre dans un mode d'apprentissage, puis on définit et on enregistre manuellement une position de fin de course basse, puis on définit et on enregistre automatiquement une position de fin de course haute, puis on sort du mode d'apprentissage.

Le document EP 0 426 577 décrit un procédé de réglage de fin de course d'un volet roulant dans lequel une action de l'installateur est requise pour enregistrer chacune des fins de course haute et basse.

Aucun des procédés d'apprentissage évoqués précédemment ne peut être appliqué indifféremment à des dispositifs de volet roulant comprenant zéro, une ou deux butées franches.

Le but de l'invention est la mise en oeuvre d'un procédé d'apprentissage des fins de courses palliant ce problème et améliorant les procédés connus de l'art antérieur. En particulier, l'invention se propose de mettre en oeuvre un procédé d'apprentissage des fins de course adapté à l'ensemble des configurations rencontrées.

Le procédé d'apprentissage selon l'invention est caractérisé par la partie caractérisante de la revendication 1.

Les revendications dépendantes 2 à 6 définissent différents modes d'exécution du procédé.

Le dispositif pour la mise en oeuvre du procédé est caractérisé par la partie caractérisante de la revendication dépendante 7.

Le dessin annexé représente, à titre d'exemple, un mode d'exécution du procédé selon l'invention.

La figure 1 est un schéma bloc d'un actionneur actionnant un produit et d'une télécommande, permettant l'exécution du procédé selon l'invention.

La figure 2 est un ordinogramme représentant les différentes étapes du procédé selon l'invention.

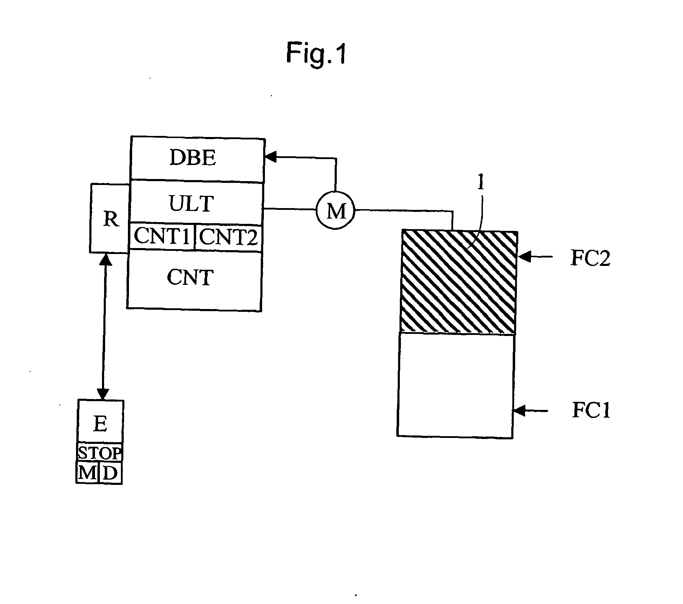

Le procédé selon l'invention est appliqué au cas d'un volet roulant 1 se déplaçant verticalement. Le schéma-bloc d'un dispositif permettant la mise en oeuvre du procédé selon l'invention est décrit tout d'abord en référence à la figure 1. L'alimentation électrique du dispositif n'est pas représentée. Ce dispositif comprend un émetteur E, un récepteur R, ces deux éléments formant un organe de commande E/R, une unité logique de traitement ULT associée à un compteur CNT à incrémentation décrémentation (selon le sens de commande de l'actionneur) dont des valeurs particulières peuvent être mémorisées soit à partir de la commande E/R, soit à partir du signal d'un détecteur de butée DBE dans des mémoires dites mémoire de fin de course basse CNT1 et mémoire de fin de course haute CNT2. Bien entendu, l'actionneur comprend également un moteur M qui entraîne effectivement le produit mobile commandé par l'unité de traitement ULT. De telles unités logiques de traitement sont connues dans l'état de la technique. L'organe de commande est par exemple constitué d'un émetteur d'ordres radioélectriques et d'un récepteur d'ordres radioélectriques. La liaison peut être bidirectionnelle pour bénéficier d'un retour d'information ou d'un dialogue d'authentification. Tout procédé filaire ou sans fil peut convenir, pourvu que l'émetteur E contienne des moyens de définir et d'adresser des ordres de commande. Dans un cas simple, l'émetteur E contient un clavier à trois touches : montée M, descente D et arrêt STOP. Comme il est connu de l'art antérieur, une même touche peut se voir affecter plusieurs fonctions selon le temps d'appui et/ou selon qu'elle est ou non utilisée en combinaison avec d'autres touches.

Le procédé selon l'invention permet de déterminer les fins de course (fin de course haute et/ou fin de course basse) réalisées grâce à des butées franches et d'enregistrer dans les mémoires CNT1 et CNT2 les positions de celles-ci de manière automatique.

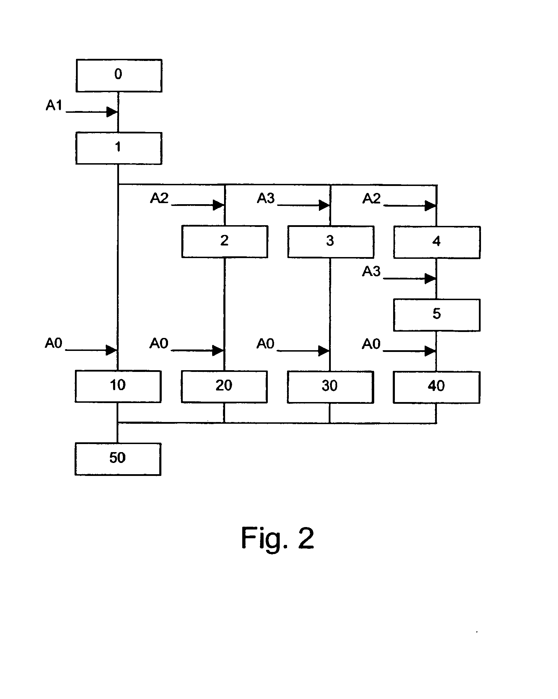

La figure 2 représente les différentes étapes du procédé selon l'invention. Les quatre branches verticales de l'ordinogramme correspondent aux quatre configurations rencontrées : le volet présente deux butées franches, le volet présente une unique butée franche en haut, le volet présente une unique butée franche en bas et le volet ne présente pas de butée franche. Une étape initiale 0 est provoquée par exemple par la mise sous tension de l'actionneur qui vient d'être installé dans le produit qu'il entraîne, par exemple un volet roulant. L'unité logique de traitement ULT est alors placée dans un mode d'attente d'ordres. On peut tout à fait autoriser, dans cette étape initiale, que des ordres de montée ou de descente soient exécutés, mais sous réserve qu'ils soient donnés sous forme de pression maintenue sur les touches de commande M ou D de l'émetteur E. Une telle précaution est nécessaire pour éviter que le moteur soit activé de manière aveugle c'est à dire activé par une commande impulsionnelle mémorisée alors qu'il n'y a pas eu de réglage des fins de course.

Dans l'étape 1, l'installateur a activé le mode d'apprentissage. Par exemple, il a appuyé simultanément sur les touches Montée et Descente de l'émetteur E. Cette commande est représentée sur la figure 2 par la flèche A1. L'unité logique de traitement ULT est programmée pour reconnaître une telle commande. Elle active alors un programme d'attente et d'exécution d'un ordre d'enregistrement de fin de course et/ou d'attente et d'exécution d'un ordre de sortie du mode d'apprentissage. L'unité logique de traitement ULT peut encore activer un programme d'attente et d'exécution d'un ordre de mouvement et/ou un programme d'attente et d'exécution d'un ordre de changement permanent de sens moteur (par exemple si l'installateur constate que la touche M de l'émetteur provoque un mouvement de descente du volet 1 et la touche D de l'émetteur provoque un mouvement de montée du volet 1 du fait de son sens de montage). La sortie du mode d'apprentissage est réalisée par une commande spécifique représentée par la flèche A0. Rien n'empêche d'utiliser pour la sortie de ce mode, la même commande que pour l'entrée. D'un point de vue ergonomique, il sera préféré une action plus intuitive, par exemple un appui maintenu sur la touche STOP pendant plus de deux secondes, alors que le produit est déjà arrêté.

Une commande de désignation et d'enregistrement de position de fin de course basse est représentée par la flèche A2, tandis qu'une commande d'enregistrement de fin de course haute est représentée par la flèche A3.

Pour désigner et enregistrer une position de fin de course basse, on peut décider qu'il faille appuyer simultanément sur les touches STOP et Descente, cette touche désignant implicitement le bas. On peut tout aussi bien décider qu'il faille appuyer sur les touches STOP et Montée, puisqu'on peut prévoir qu'un mouvement de montée suivra immédiatement. Il s'agit bien entendu de convention, ou de respect d'habitudes déjà prises dans ce type d'installation.

Si l'installateur commande la sortie du mode d'apprentissage alors qu'il n'a provoqué aucune commande d'enregistrement de fin de course comme représenté sur l'ordinogramme de la figure 2 dans la première branche verticale en partant de la gauche, on passe à l'étape 10. A cette étape, le programme contenu dans l'unité de traitement ULT déduit des commandes précédentes activées par l'installateur que l'actionneur est associé à un volet 1 présentant deux butées franches. On passe ensuite à l'étape 50 qui sera décrite plus bas dans ce texte. On remarque qu'il n'a nullement été nécessaire de manoeuvrer le produit pour atteindre les butées dans cette phase de configuration.

Dans la deuxième branche de l'ordinogramme, l'installateur commande la désignation et l'enregistrement d'une position de fin de course basse FC1, après avoir manoeuvré le moteur M jusqu'à atteindre une telle position du volet. Cette action est représentée par la flèche A2, et elle active l'étape 2 de mise en mémoire dans la mémoire CNT1 du contenu du compteur de position CNT. L'installateur donne ensuite l'ordre représenté par la flèche A0 de sortir du mode d'apprentissage. Ceci active l'étape 20. A cette étape, le programme contenu dans l'unité de traitement ULT déduit des commandes précédentes activées par l'installateur que l'actionneur est associé à un volet 1 présentant une seule butée franche : la butée haute. On passe ensuite à l'étape 50. On remarque qu'il n'a nullement été nécessaire de manoeuvrer le produit pour atteindre la butée haute dans cette phase de configuration.

La situation est inversée dans la troisième branche de l'ordinogramme, dans laquelle c'est la position de fin de course haute FC2 qui est définie et enregistrée. Cette action est représentée par la flèche A3, et elle active l'étape 3 de mise en mémoire dans la mémoire CNT2 du contenu du compteur de position CNT. L'installateur donne ensuite l'ordre représenté par la flèche A0 de sortir du mode d'apprentissage. Ceci active l'étape 30. A cette étape, le programme contenu dans l'unité de traitement ULT déduit des commandes précédentes activées par l'installateur que l'actionneur est associé à un volet 1 présentant une seule butée franche : la butée basse. On passe ensuite à l'étape 50. On remarque qu'il n'a nullement été nécessaire de manoeuvrer le produit pour atteindre la butée basse dans cette phase de configuration.

Enfin, la quatrième branche de l'ordinogramme décrit la situation où l'installateur effectue successivement une commande de désignation et d'enregistrement d'une position de fin de course basse représentée par la flèche A2, puis d'une position de fin de course haute représentée par la flèche A3, ce qui provoque le passage aux étapes 4 et 5, fonctionnellement identiques aux étapes 2 et 3. Bien entendu, la séquence d'enregistrement des positions des fins de course aurait pu être inversée, en commençant d'abord par la position de fin de course haute.

L'installateur donne ensuite l'ordre représenté par la flèche A0 de sortir du mode d'apprentissage. Ceci active l'étape 40. A cette étape, le programme contenu dans l'unité de traitement ULT déduit des commandes précédentes activées par l'installateur que l'actionneur est associé à un volet 1 ne présentant pas de butée franche. On passe ensuite à l'étape 50.

A l'étape 50, les commandes rapides, de type impulsionnel mémorisé, deviennent validées par l'unité logique de traitement, puisque les positions des fins de course sont désormais soit connues, soit détectables à partir de butées franches. Cela signifie par exemple qu'une impulsion brève sur le bouton poussoir de Montée M est interprétée par l'unité de traitement comme un ordre de montée jusqu'à atteindre soit la butée haute, soit la position de fin de course haute FC2 préalablement enregistrée. Dans le cas où il existe au moins une butée franche, la détection de la position de la butée franche supérieure et l'enregistrement de la position du volet correspondant au contact contre cette butée franche sont réalisés lorsqu'un ordre de montée est donné et/ou la détection de la position de la butée franche inférieure et l'enregistrement de la position du volet correspondant au contact contre cette butée franche sont réalisés lorsqu'un ordre de descente est donné.

Dans le cas où l'arrêt haut se fait sur une butée franche, la position correspondante peut être mémorisée comme position de fin de course, avec éventuellement un décalage permettant d'éviter de solliciter à nouveau cette butée lors des manoeuvres suivantes. Ce type d'apprentissage est connu de l'état de la technique, de même qu'il est connu de venir périodiquement réactualiser cet enregistrement pour tenir compte d'éventuelles dérives ou déformations de la chaîne cinématique. Enfin, si les caractéristiques du moteur et/ou de son alimentation le permettent, on peut prévoir un fonctionnement à couple réduit tant que les butées n'ont pas été repérées.

Pour simplifier, ce repérage ultérieur des butées est ici représenté à l'étape 50, mais il est clair qu'il peut avoir lieu dans toute étape suivante de la vie du produit, même après la livraison de l'installation à son futur utilisateur : il s'agit simplement de profiter de la première détection de butée pour procéder à la mémorisation de la position de fin de course correspondante.

Enfin, comme cela a été mentionné, il est clair qu'il n'est pas indispensable, dans le procédé décrit, de désigner explicitement la fin de course haute (ou basse) en tant que telle. Il est possible par exemple d'utiliser simplement une commande spécifique d'apprentissage de fin de course, en laissant à l'unité de traitement le soin de déterminer s'il s'agit d'une fin de course haute (parce que le mouvement précédent répondait à un ordre de montée) ou d'une fin de course basse (parce que le mouvement précédent correspondait à un ordre de descente).

L'invention peut s'appliquer de la même façon à tout actionneur destiné à être monté sur des produits mobiles de fermeture, d'occultation ou de protection solaire. Le déplacement de ces produits dans l'espace peut être tout aussi bien horizontal, incliné ou vertical.

## Revendications

1. Procédé d'apprentissage des fins de course d'un actionneur électrique destiné à la manoeuvre d'un produit mobile de protection solaire, d'occultation ou de fermeture, **caractérisé en ce qu'**il comprend une première phase comprenant les étapes suivantes:
a. entrer dans un mode d'apprentissage,
b. définir :
- zéro position de fin de course ou
- une ou deux positions de fin de course, ainsi que leur type: fin de course basse (FC1) ou fin de course haute (FC2),
c. enregistrer ces positions de fin de course en fonction de leur type dans des mémoires dites mémoire de fin de course basse (CNT1) et mémoire de fin de course haute (CNT2),
d. quitter le mode d'apprentissage,
puis une deuxième phase comprenant les étapes suivante :
e. utiliser les enregistrements précédents pour déterminer le nombre et le type des fins de course réalisées par des butées franches,
f. s'il existe au moins une fin de course réalisée grâce à une butée franche, détecter la position de la butée franche, respectivement, les positions des butées franches et enregistrer cette position comme position de fin de course, respectivement, ces positions comme positions de fin de course.

2. Procédé selon la revendication 1, **caractérisé en ce que** la dernière étape comprend les pas suivants:
- atteindre la butée franche, respectivement, les butées franches par commande de l'actionneur,
- déterminer le type de fin de course réalisée par la butée franche, respectivement, le type de fin de course réalisée par les butées franches en fonction de la commande de l'actionneur et,
- enregistrer la position, respectivement les positions.

3. Procédé selon la revendication 1 ou 2, **caractérisé en ce que** l'étape :
- définir zéro, une ou deux positions de fin de course, ainsi que leur type: fin de course basse (FC1) ou fin de course haute (FC2),
comprend zéro, une ou deux itérations des étapes suivantes :
- activer l'actionneur pour amener le produit dans une position de fin de course,
- désigner, par une commande spécifique, cette position comme étant une fin de course haute ou une fin de course basse.

4. Procédé selon la revendication 1 ou 2, **caractérisé en ce que** l'étape :
- définir zéro, une ou deux positions de fin de course, ainsi que leur type: fin de course basse (FC1) ou fin de course haute (FC2),
comprend zéro, une ou deux itérations des étapes suivantes :
- activer l'actionneur pour amener le produit dans une position de fin de course,
- désigner, par une commande spécifique, cette position comme étant une fin de course,
- utiliser l'information de sens d'actionnement du produit antérieur à l'étape de désignation précédente pour déterminer s'il s'agit d'une fin de course basse ou d'une fin de course haute.

5. Procédé selon la revendication 1 ou 2, **caractérisé en ce que** l'étape :
- définir zéro, une ou deux positions de fin de course, ainsi que leur type: fin de course basse (FC1) ou fin de course haute (FC2),
comprend zéro, une ou deux itérations des étapes suivantes :
- activer l'actionneur pour amener le produit dans une position de fin de course,
- désigner, par une commande spécifique, cette position comme étant une fin de course,
- activer l'actionneur pour diriger le produit vers l'autre position de fin de course,
- utiliser l'information de sens d'actionnement du produit dans l'étape précédente pour déterminer si la position de fin de course précédemment désignée est une position de fin de course basse ou une position de fin de course haute.

6. Procédé selon l'une des revendications précédentes, **caractérisé en ce que** le fonctionnement du moteur (M) se fait à couple réduit jusqu'à ce que les deux positions de fin de course aient été enregistrées.

7. Dispositif pour la mise en oeuvre du procédé selon l'une des revendications précédentes, **caractérisé en ce qu**'il comprend au moins un émetteur (E), un récepteur (R) lié à un actionneur comprenant un moteur (M) agissant sur un produit mobile, un compteur (CNT), une unité logique de traitement (ULT) associèe à au moins deux mémoires (CNT1, CNT2), dont les valeurs mémorisées correspondent à des valeurs du compteur (CNT) identifiant des fins de course du produit mobile (1) et un détecteur de butées (DBE) et en ce qu'il comprend un programme déduisant si le produit mobile présente zéro, une ou deux butées franches.

## Claims

1. A method for learning limits of travel of an electric actuator intended for manoeuvring a movable product for solar protection, for privacy or for closure, **characterised in that** it comprises a first phase comprising the following steps:
a. entering a learning mode,
b. defining:
- zero limit of travel positions or
- one or two limit of travel positions, and the type of travel position: bottom limit of travel (FC1) or top limit of travel (FC2),
c. recording the limit of travel positions as a function of type in memories referred to as a bottom limit of travel memory (CNT1) and a top limit of travel memory (CNT2),
d. exiting the learning mode,
then a second phase comprising the following steps:
e. using the previous recordings to determine the number and the type of the limits of travel produced by end stops, and
f. if there exists at least one limit of travel produced by an end stop, detecting the position of the end stop or the positions of the end stops and recording this position as limit of travel position or these positions as limit of travel positions.

2. The method as claimed in claim 1, **characterised in that** the last step comprises the following sub-steps:
reaching the end stop or the end stops, by control of the actuator,
determining the type of the limit of travel position produced by the end stop or the type of the limit of travel position produced by the end stops as a function of the control of the actuator and,
recording the position or the positions.

3. The method as claimed in claim 1 or 2, **characterised in that** the step:
defining zero, one or two limit of travel positions, and
the type of travel position: bottom limit of travel (FC1) or top limit of travel (FC2),
comprises zero, one or two iterations of the following steps:
activating the actuator so as to bring the movable product to a limit of travel position,
designating, through a specific command, this position as being a top limit of travel position or a bottom limit of travel position.

4. The method as claimed in claim 1 or 2, **characterised in that** the step:
defining zero, one or two limit of travel positions, and the type of travel position: bottom limit of travel (FC1) or top limit of travel (FC2),
comprises zero, one or two iterations of the following steps:
activating the actuator so as to bring the movable product to a limit of travel position,
designating, through a specific command, this position as being a limit of travel position,
using information regarding direction of actuation of the movable product prior to the designating step to determine whether it is a bottom limit of travel position or a top limit of travel position.

5. The method as claimed in claim 1 or 2, **characterised in that** the step:
defining zero, one or two limit of travel positions, and the type of travel position: bottom limit of travel (FC1) or top limit of travel (FC2),
comprises zero, one or two iterations of the following steps:
activating the actuator so as to bring the movable product to a limit of travel position,
designating, through a specific command, this position as being a limit of travel position,
activating the actuator so as to direct the movable product toward the other limit of travel position,
using information regarding direction of actuation of the movable product in the preceding step to determine whether the previously designated limit of travel position is a bottom limit of travel position or a top limit of travel position.

6. The method as claimed in one of the preceding claims, **characterised in that** the operation of the motor (M) is effected at reduced torque until the two limits of travel positions have been recorded.

7. A device for the implementation of the method as claimed in one of the preceding claims, **characterised in that** the device comprises at least a transmitter (E), a receiver (R) linked to an actuator comprising a motor (M) acting on the movable product, a counter (CNT), a logic processing unit (ULT) associated with at least two memories (CNT1, CNT2), whose stored values correspond to values of the counter (CNT) identifying limits of travel position of the movable product (1) and an end stop detector (DBE) and **in that** it comprises a software determining whether the mobile product has zero, one or two end stops.

## Patentansprüche

1. Verfahren zur Einrichtung der Endstellungen einer elektrischen Antriebsvorrichtung, die zur Betätigung eines beweglichen Erzeugnisses zum Sonnenschutz, zur Abdunkelung und zum Verschliessen bestimmt ist, **dadurch gekennzeichnet, dass** das Verfahren eine erste Phase mit den folgenden Schritten aufweist:
a. Eintritt in einen Lernmodus,
b. Definition:
- einer Endstellung Null oder
- einer oder zweier Endstellungen und deren Typ, nämlich untere Endstellung (FC1) oder obere Endstellung (FC2),
c. Speicherung dieser Endstellungen in Speichereinheiten, nämlich in einem Speicher der unteren Endstellung (CNT1) und in einem Speicher der oberen Endstellung (CNT2) in Abhängigkeit von ihrem Typ, und
d. Verlassen des Lernmodus,
und dann eine zweite Phase mit den folgenden Schritten:
e. Benutzung der vorhergehenden Speicherinhalte zur Bestimmung der Anzahl und des Typs der Endstellungen, die durch freilaufende Anschläge verwirklicht werden, und
f. im Falle der Existenz mindestens einer Endstellung, die durch einen freilaufenden Anschlag verwirklicht ist, Ermittlung der Position des freilaufenden Anschlags bzw. der Positionen der freilaufenden Anschläge, und Speicherung dieser Position als Endstellung bzw. dieser Positionen als Endstellungen.

2. Verfahren nach Anspruch 1, **dadurch gekennzeichnet, dass** der letzte Schritt die folgenden Teilschritte umfasst:
- Anfahren des freilaufenden Anschlags bzw. der freilaufenden Anschläge durch Steuerung des Antriebs,
- Bestimmen des Typs der Endstellung, die durch den freilaufenden Anschlag verwirklicht wird, bzw. der Endstellungen, die durch die freilaufenden Anschläge verwirklicht werden, in Abhängigkeit von der Steuerung der Antriebsvorrichtung, und
- Speichern der Stellung bzw. der Stellungen.

3. Verfahren nach Anspruch 1 oder 2, **dadurch gekennzeichnet, dass** der Schritt der
- Definition einer Endstellung Null oder einer oder zweier Endstellungen und deren Typ als untere Endstellung (FC1) oder obere Endstellung (FC2)
null, eine oder zwei Iterationen der folgenden Schritte umfasst:
- Aktivierung des Antriebs zur Überführung des Erzeugnisses in eine Endstellung,
- Benennung dieser Stellung als obere oder als untere Endstellung mittels eines besonderen Befehls.

4. Verfahren nach Anspruch 1 oder 2, **dadurch gekennzeichnet, dass** der Schritt der
- Definition von null, einer oder zwei Endstellungen sowie deren Typ als untere Endstellung (FC1) oder obere Endstellung (FC2)
null, eine oder zwei Iterationen der folgenden Schritte umfasst:
- Aktivierung des Antriebs zur Überführung des Produkts in eine Endstellung,
- Benennung dieser Stellung als eine Endstellung mittels eines besonderen Befehls,
- Verwendung der Information über die Antriebsrichtung des Produkts vor dem vorhergehenden Benennungsschritt zur Bestimmung, ob es sich um eine untere Endstellung oder um eine obere Endstellung handelt.

5. Verfahren nach Anspruch 1 oder 2, **dadurch gekennzeichnet, dass** der Schritt der
- Definition von null, einer oder zwei Endstellungen sowie deren Typ als untere Endstellung (FC1) oder obere Endstellung (FC2)
null, eine oder zwei Iterationen der folgenden Schritte umfasst:
- Aktivierung des Antriebs zur Überführung des Erzeugnisses in eine Endstellung,
- Benennung dieser Stellung als eine Endstellung mittels eines besonderen Befehls,
- Aktivierung des Antriebs zwecks Überführung des Erzeugnisses in die andere Endstellung,
- Verwendung der Information über die Antriebsrichtung des Erzeugnisses während des vorhergehenden Schrittes, um zu bestimmen, ob die zuvor benannte Entstellung eine untere Endstellung oder eine obere Endstellung ist.

6. Verfahren nach einem der vorstehenden Ansprüche, **dadurch gekennzeichnet, dass** der Motors (M) unter vermindertem Drehmoment betrieben wird, bis die beiden Endstellungen gespeichert sind.

7. Vorrichtung zur Ausführung des Verfahrens nach einem der vorstehenden Ansprüche, **dadurch gekennzeichnet, dass** sie mindestens einen Sender (E); einen Empfänger (R), der mit einer Antriebsvorrichtung mit einem Motor (M), der auf ein bewegbares Erzeugnis einwirkt, verbunden ist; einen Zähler (CNT); eine logische Verarbeitungseinheit (ULT), welche mindestens zwei Speichern (CNT1, CNT2) zugeordnet ist, deren gespeicherte Werte den Werten des Zählers (CNT) entsprechen, die die Endstellungen des bewegbaren Erzeugnisses (1) identifizieren; sowie einen Fühler für die Anschläge (DBE) aufweist, und dass sie weiterhin ein Programm enthält, welches ableitet, ob das bewegbare Erzeugnis null, einen oder zwei freilaufende Anschläge aufweist.
